# EUROPEAN PATENT APPLICATION

(11) **EP 3 671 458 A1**
(43) Date of publication of application: **24.06.2020**
(21) Application number: 18215353.6
(22) Date of filing: 21.12.2018
(51) Int. Cl.: G06F 9/54, G06F 15/167

(54) **RECEIVING MESSAGES IN A MANY TO ONE PATTERN**

(71) Applicant: Siemens Aktiengesellschaft, 80333 München (DE)
(72) Inventor: Hackländer, Frank, 70599 Stuttgart (DE); Simakov, Dmitry, 76131 Karlsruhe (DE)

(57) **Abstract**

The present invention is related to memory for a cloud-based or automation system for asynchronously receiving messages and a respective cloud-based or automation system for asynchronously receiving messages as well as a method of asynchronously receiving messages in a cloud-based or automation system. Messages of a predefined data format sent from at least one sender are received and stored in the memory. The stored messages of the predefined data format are asynchronously fetched from the memory by a recipient.

## Description

The present invention is related to memory for a cloud-based or automation system for asynchronously receiving messages and a respective cloud-based or automation system for asynchronously receiving messages as well as a method of asynchronously receiving messages in a cloud-based or automation system. In particular, messages of a predefined data format are stored in the memory and can be asynchronously fetched from the memory.

So called message brokers enable asynchronous communication between services of a system like a cloud with cloud based applications or services. Message brokers are Message-Oriented Middleware (MOM) for message validation, transformation and routing which mediate communication among applications. Message Brokers are used in order to decouple communication between services. Typically, content-based or topic-based message routing in combination with a "point-to-point" or "one-to-many" pattern is utilised. In particular, the "Pub-Sub-Pattern" which is a specific "one-to-many" pattern is utilised, where a publisher publishes a messages in a topic, which message is forwarded by the message broker to all subscribers of the respective topic. A common use case is that a service requires a list of or has to maintain a register of other services. Such list or register has to be as current as possible. Normally, this problem is solved by means of synchronous Application Programming Interfaces (APIs). Services can register and unregister at the register service. The register service can keep the list or register current. However, the services are directly dependent on each other. Further, the list or register could not be current because services could stop to exist without unregistering at the register service. Additionally, the register service must have a very high availability for all services to register and unregister due to the synchronous message routing - in other words, the register service must always be running.

Moreover, all services must provide for retry mechanisms for registering and unregistering at the register service in case the register service is currently unavailable.

The object of the present invention is to overcome or at least alleviate these problems by providing a memory for a system for asynchronously receiving messages according to independent claim 1 as well as a system for asynchronously receiving messages and a method of asynchronously receiving messages according to the further independent claims. Further refinements of the present invention are subject of the dependent claims.

According to a first aspect of the present invention a memory for a cloud-based or automation system for asynchronously receiving messages is communicatively coupleable to a recipient. The memory is arranged and configured for receiving and storing messages of a predefined data format. The messages are sent in the predefined data format from at least one sender. For asynchronously receiving the messages the stored messages can be fetched asynchronously from the memory by the recipient.

According to a second aspect of the present invention a cloud-based or automation system for asynchronously receiving messages comprises a recipient at least one sender and a memory. The at least one sender is arranged and configured for sending a message in a predefined data format. The memory is communicatively coupled to the recipient. The memory is arranged and configured for receiving and storing messages of the predefined data format sent from the at least one sender. The recipient is further arranged and configured for asynchronously fetching the stored messages from the memory in order to asynchronously receive the messages.

According to a third aspect of the present invention a method of asynchronously receiving messages in a cloud-based or automation system comprises the steps:
- Receiving and storing a message of a predefined data format by a memory, wherein the message is sent in the predefined data format from at least one sender.
- Asynchronously fetching the stored message from the memory by a recipient in order to asynchronously receive the message.

According to a fourth aspect of the present invention a computer program comprises instructions which, when the program is executed by a computer, cause the computer to carry out the steps of the method according to the third aspect of the present invention.

According to a fifth aspect of the present invention a computer-readable medium comprises instructions which, when executed by a computer, cause the computer to carry out the steps of the method according to the third aspect of the present invention.

The memory receives messages of the predefined data format. The predefined data format is a well-defined message format. Consequently, the memory can after receiving a message decide based on the data format of the received message whether the message has the predefined data format and whether the message has to be stored. Thus, only messages from senders that have been sent by the senders in the predefined data format are stored by the memory after having been received by the latter. The messages may be data provided from entities of an automation system and/or cloud-based system.

The recipient can fetch the messages of the predefined data format from the memory. Fetching can be done by pulling the messages from the memory by the recipient or by pushing the messages to the recipient by the memory or by a combination of the both. The messages of the predefined data format can be intermediately stored in the memory until they are fetched by the recipient. The messages can be automatically deleted from the memory after they have been fetched by the recipient. Alternatively, the messages can be permanently stored (until they are explicitly deleted) and marked as fetched after having been fetched by the recipient. The recipient may be an entity like a controller or service in an automation system or cloud-based system.

The storing of the messages having the predefined data format in the memory enables asynchronous message routing between the at least one (many) sender(s) and the recipient. Thus, a "many-to-one" pattern is utilised for message routing and the messages do not have to be immediately received by the recipient, but can be fetched (in batches) at specific time points, e.g. in a predefined interval or at specific events. The at least one sender sends the messages in the predefined data format to the memory instead directly to the recipient.

Consequently, the direct dependency between the at least one sender and the recipient is removed by the asynchronous communication/message routing. Further, due to the asynchronous message routing in the "many-to-one" pattern, the recipient, which may be a register service or a publisher, does not have to be always available for the senders. Instead the messages of the predefined data format are sent to the memory and (intermediately) stored there until the recipient fetches them. Additionally, the at least one sender does not have to implement a retry-mechanism for sending the messages in the predefined data format, because the messages will be (sooner or later) received by the recipient even in case the recipient is unavailable for some time (e.g. due to down-time of the respective device).

According to a refinement of the present invention the memory ignores messages of a different data format then the predefined data format. Additionally or alternatively the memory ignores messages from senders that are not registered at the recipient.

According to a further refinement of the present invention the recipient ignores messages of a different data format then the predefined data format. Additionally or alternatively the recipient ignores messages from senders that are not registered at the recipient.

The memory checks whether an incoming message has the predefined data format. Only messages of the predefined data format are considered relevant for the recipient. If the incoming message has a different data format, the message is immediately disregarded. Likewise, incoming messages sent from senders that are not registered at the recipient are immediately disregarded by the memory. Thereto, the memory can check whether a sender identifier of each message, e.g. in metadata (header, footer etc.) of the respective message, uniquely specifying the respective sender equals one sender identifier in a list of registered senders of the recipient that was provided to the memory by the recipient. Additionally or alternatively, the recipient applies the same rules as the memory and disregards messages that do not have the predefined data format or that are sent from senders which are not registered at the recipient.

By disregarding messages of a different data format than the predefined data format on the one hand the security is increased as for example malware in a different data format is automatically deleted and does not reach the recipient (e.g. register service or publisher). On the other hand, the efficiency is increased as only messages relevant for the recipient are stored in the memory and other messages are disregarded such that the recipient does not have to assess and verify such other messages.

According to a refinement of the present invention the messages of the predefined data format have a "time-to-life" property defining a time point at which the message is to be deleted. The memory is further arranged and configured for deleting messages having a time point for the time-to-life property that lies in the past.

According to a further refinement of the present invention the method further comprises the step:
- Deleting messages having a time point for a "time-to-life" property of the stored message in the predefined data format that lies in the past.
The messages of the predefined data format have a time-to-life property defining a time point at which the message is to be deleted.

Depending on the time point specified in the "time-to-life" property of each message stored in the memory the messages are deleted from the memory as soon as the specified time point has passed.

Consequently, the memory only contains current messages that are still relevant and not obsolete. Further, the memory is kept clean as every message is deleted after some time.

According to a refinement of the present invention the cloud-based or automation system is arranged and configured for registering processes. The recipient is a register (service) arranged and configured for listing running processes based on messages sent in the predefined data format by the running processes. The at least one sender is a running process which has to be listed in the register during its runtime. The messages of the predefined data format from the at least one running process have a "time-to-life" property resembling a predefined time span. The at least one running process sends a message in the predefined data format with a "time-to-life" property giving a predefined time span that ends in the future to the memory at the beginning of its runtime and every time during its runtime before the predefined time span of the preceding sent message of the predefined data format elapses. The register and/or the memory replaces a stored message of the predefined data format of the at least one running process with a message of the predefined data format of the at least one running process having a "time-to-life" property giving a predefined time span that expires later than the one of the stored message of the predefined data format of the at least one running process.

According to a further refinement of the present invention the method is for registering processes. The recipient is a register arranged and configured for listing running processes based on messages sent in the predefined data format by the running processes. The at least one sender is a running process which has to be listed in the register during its runtime. The messages of the predefined data format from the at least one running process have a "time-to-life" property resembling a predefined time span. The method further comprises the steps:
- Sending a message in the predefined data format with a time-to-life property giving a predefined time span that ends in the future to the memory (by the at least one running process at the beginning of its runtime and every time during its runtime before the predefined time span of the preceding sent message of the predefined data format elapses.
- Replacing a stored message of the predefined data format of the at least one running process with a message of the predefined data format of the at least one running process having a "time-to-life" property giving a predefined time span that expires later than the one of the stored message of the predefined data format of the at least one running process in the register and/ or the memory.

As soon as a process which has to be registered in the register (service) begins to run, the running process sends a message in the predefined data format to the register (service). The message of the predefined data format sent to the register has the "time-to-life" property giving a time point in the future. The time point in the future is selected thus it resembles the predefined time span starting from the time point when the message in the predefined data format is sent. The message of the predefined data format is kept in the register and in the memory as long as the time point given by the "time-to-life" property has not expired. During its runtime the at least one running process sends further messages in the predefined data format at least once in time before the time point given by the "time-to-life" property of the preceding message of the predefined data format of the at least one running process expires. Thus, the message of the predefined data format of the at least one running service is renewed with a corresponding message of the predefined data format from the at least one running service before it is deleted in the register and in the memory. Thus, processes get unregistered at the register as soon as the time point given by the "time-to life" property of their respective last message in the predefined data format expires and no new message in the predefined data format having a "time-to-life" property giving a time point in the future is sent.

Consequently the register is kept current although the register (service) asynchronously fetches the messages of the predefined data format from the memory. Additionally, redundancy in the memory and the register (service) is avoided as only one message of each running process/sender is present in the memory and the register (service)/recipient at a time. Further, even if a process stops to exist without unregistering at the register (service), the last message of the process is deleted after some time and the process is automatically unregistered by the register (service).

According to a refinement of the present invention the cloud-based or automation system is arranged and configured for acknowledging receptions. The recipient is a publisher arranged and configured for publishing publications. The at least one sender is a subscriber arranged and configured for receiving the publications from the publisher. The messages of the predefined data format are acknowledgements. The at least one subscriber is further arranged and configured for sending an acknowledgement in the predefined data format to the memory in response to reception of a publication sent from the publisher.

According to a further refinement of the present invention the method is for acknowledging receptions. The recipient is a publisher. The at least one sender is a subscriber. The messages of the predefined data format are acknowledgements. The method further comprises the steps:
- Publishing publications by the publisher.
- Receiving the publications from the publisher by the at least one subscriber.
- Sending an acknowledgement in the predefined data format to the memory by the at least one subscriber in response to reception of a publication sent from the publisher.

The publisher publishes a publication (e.g. message in a specific topic) for subscribers. A Message Broker can forward the publication of the publisher to the subscribers based on a "Pub-Sub-Pattern" ("one-to-multiple" pattern). The subscribers are subscribed to the publisher and/or the Message Broker for receiving publications of the publisher. At least one of the subscribers has to acknowledge receipt of the publication to the publisher. Thereto, the at least one subscriber is registered at the publisher. Upon receiving of the publication (directly from the publisher or from the Message Broker) the at least one subscriber sends an acknowledgement in the predefined data format to the memory. The publisher asynchronously fetches the acknowledgement(s) of the at least one receiver which is registered to the publisher.

Thus, the receipt of the publication by the at least one subscriber is acknowledged to the publisher by means of asynchronous message routing from the subscriber to the publisher via the memory. Thereby, the publisher does not have to be always available for receiving acknowledgements from the subscribers but can instead fetch the acknowledgements from the memory whenever the publisher is ready to do so.

The present invention and its technical field are subsequently explained in further detail by an exemplary embodiment shown in the drawing. The exemplary embodiment only conduces better understanding of the present invention and in no case is to be construed as limiting for the scope of the present invention. Particularly, it is possible to extract aspects of the subject-matter described in the figure and to combine it with other components and findings of the present description or figure, if not explicitly described differently. Equal reference signs refer to the same objects, such that explanations from other figures may be supplementally used.
- Fig. 1: shows a schematic view of a memory and cloud-based or automation system according to the present invention.
- Fig. 2: shows a schematic flow chart of a method according to the present invention.
- Fig. 3: shows a schematic view of first embodiments of the memory and of the cloud-based or automation system according to the present invention.
- Fig. 4: shows a schematic flow chart of a first embodiment of the method according to the present invention.
- Fig. 5: shows a schematic view of second embodiments of the memory and of the cloud-based or automation system according to the present invention.
- Fig. 6: shows a schematic flow chart of a second embodiment of the method according to the present invention.

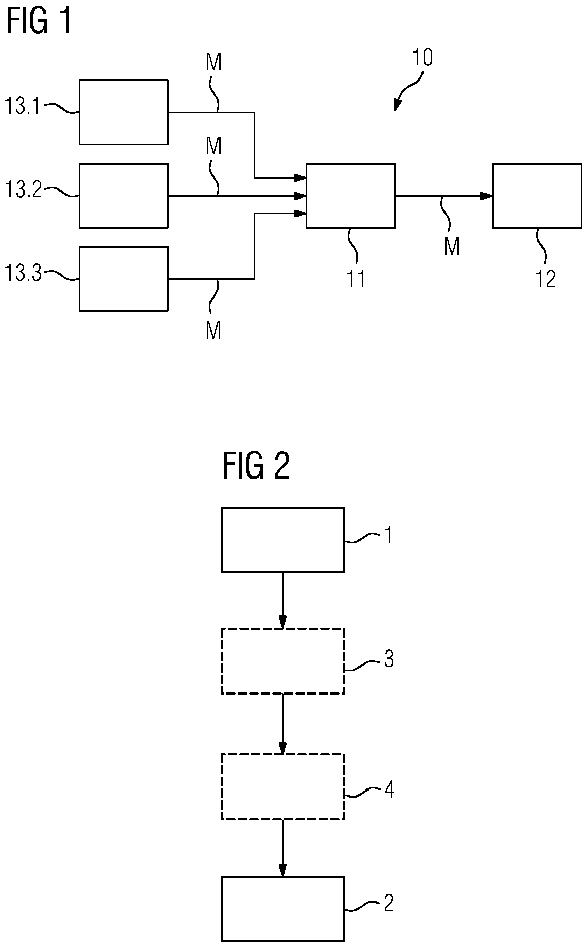

In Fig. 1 a memory 11 and a cloud-based or automation system 10 comprising the memory 11 according to the present invention are schematically depicted. The memory 11 is communicatively connected with a recipient 12 of the system 10. At least one sender 13 of the cloud-based or automation system 10 is communicatively coupled to the memory 11. Here, exemplarily, three senders 13.1, 13.2, 13.2 are communicatively coupled to the memory 11.

The senders 13.1-13.3 can transmit messages M to the memory 11. Thereto, the messages M are sent by the senders 13.1-13.3 in a predefined data format. The memory is configured for receiving and storing messages of the predefined data format sent by the senders 13.1-13.3.

The messages M are to be received by the recipient 12. Thereto, the recipient 12 asynchronously fetches (push and/or pull) the messages M from the memory 11. The recipient 12 does not have to be continuously available for directly receiving the messages M from the senders 13.1-13.3, but fetches the messages M from the memory 11 when convenient.

The recipient 12 may fetch the messages M in batches from the memory 11. Further, the recipient 12 may fetch the messages M from the memory 11 at certain time points or after a predefined time interval has passed. Alternatively, the recipient 12 may fetch the messages M from the storage 11 in response to certain events.

The memory 11 may ignore messages of a different data format than the predefined data format. Alternatively or additionally the recipient 12 may ignore messages of a different data format than the predefined data format.

Further, the messages M of the predefined data format may contain a "time-to-life" property. The "time-to-life" property gives a time point at which the message M is to be deleted. The memory 11 and alternatively or additionally the recipient 12 are configured for deleting messages M having a time-to-life property giving a time point that lies in the past.

In Fig. 2 a flow chart of a method of asynchronously receiving messages in a cloud-based or automation system according to the present invention is schematically depicted. The method comprises the steps of receiving and storing 1 a message and of asynchronously fetching 2 the stored message as well as the optional steps of ignoring 3 a message of a different data format and of deleting 4 messages.

The message has a predefined data format and is received and stored by the memory according to Fig. 1. The message is sent by the at least one sender and bound for the recipient.

The message is asynchronously fetched (push and or pull) from the memory by the recipient. The recipient may fetch the message at a predefined time point or after a predefined time interval has lapsed or in response to a certain event. Thus, there is no need for non-stop availability of the recipient in order to directly and continuously receive the message from the at least one sender by the recipient.

Further, messages having a different data format than the predefined data format may be ignored by the memory and/or the recipient in the step of ignoring 3.

Moreover, the messages may have a "time-to-life" property that defines a time point. Messages having a "time-to-life" property that gives a time point that lies in the past may be deleted by the memory and/or the recipient in the step of deleting 4.

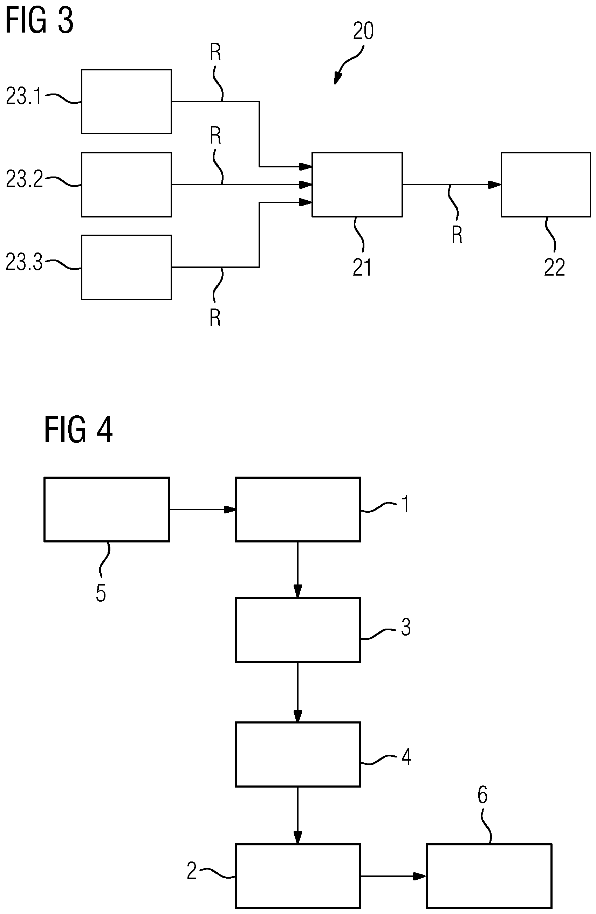

In Fig. 3 a first embodiment of the memory 21 and a first embodiment of the cloud-based or automation system 20 comprising the memory 21 according to the present invention are schematically depicted. The memory 21 and the cloud-based or automation system 20 are based on the memory 11 and the cloud-based or automation system 10, respectively. Only differences to the latters are therefore described in the following.

The recipient is a register 22 and the at least one sender is a running process 23 (exemplarily three running processes 23.1, 23.2, 23.3) that has to be registered at the register 22.

The running processes 23.1-23.3 send a message R for registering at the register 22 as soon as they are instantiated and begin to exist to the memory 21. During their existence the running processes 23.1-23.3 send further messages R to the memory 21. The register 22 asynchronously fetches the messages R from the memory 21 in order to register the running processes 23.1-23.3 that have sent a corresponding message R for registering at the register 22. The messages R have a "time-to-life" property resembling a predefined time span. The running processes 23.1-23.3 each send a new message R to the memory 21 before the time span given by the "time-to-life" property of the respective preceding message R ends. The memory 21 and/or the register 22 may replace a message R from one running process 23.1-23.3 with a message R from the same running process 23.1-23.3 having a "time-to-life" property giving a later time point. Such, as long as a running process 23.1-23.3 that has to be registered at the register 22 exists, a message R of this running process 23.1-23.3 is stored in the memory and can be fetched by the register 22 for keeping the register of running processes up to date.

In Fig. 4 a flow chart of a fist embodiment of the method according to the present invention is schematically depicted. The method steps of the first embodiment correspond to the method steps of the method of Fig. 2. Therefore, only differences are described in the following.

The method is a method for registering processes. The recipient is a register at which the senders, which are running processes, have to be registered. Thereto, the method further comprises the steps of sending 5 a message and of replacing 6 a stored message.

In the step of sending 5 the messages are sent in the predefined data format with a "time-to-life" property giving a predefined time span that ends in the future by the running processes to the memory in order to register at the register. After receiving and storing 1 the messages from the running processes messages of a different data format than the predefined data format are ignored in the step of ignoring 3 and messages having a "time-to-life" property defining a time point that lies in the past are deleted in the step of deleting 4 by the memory and/or the register. The stored messages are asynchronously fetched by the register and, thus, the running processes are listed in the register. Stored messages are replaced by messages having a later "time-to-life" property (time point lies further in the future) by the memory and/or the register in the step of replacing 6.

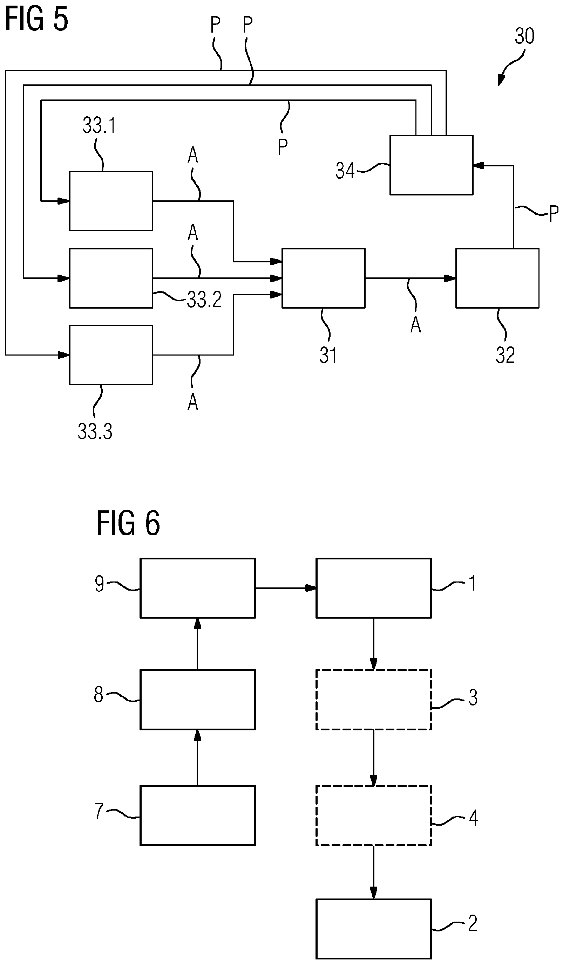

In Fig. 5 a second embodiment of the memory 31 and a second embodiment of the cloud-based or automation system 30 comprising the memory 31 according to the present invention are schematically depicted. The memory 31 and the cloud-based or automation system 30 are based on the memory 11 and the cloud-based or automation system 10, respectively. Only differences to the latters are therefore described in the following.

The recipient is a publisher 32 and the at least one sender is a subscriber 33 (exemplarily three subscribers 33.1, 33.2, 33.3) that receives publications P from the publisher 32 and that has to acknowledge receipt of the publications P to the publisher 32. Thereto, the messages of the predefined data format are acknowledgements A, which are sent in the predefined data format form the subscribers 33.1-33.3 to the memory 31. The memory 31 receives and stores the acknowledgements A as well as optionally ignores acknowledgements sent in a different data format than the predefined data format and optionally deletes acknowledgements A having a "time-to-life" property giving a time point that lies in the past. The publisher 32 asynchronously fetches the acknowledgements A form the memory 31. The publisher 32 may also ignore acknowledgements of a different data format than the predefined data format and may delete acknowledgements A that have a "time-to-life" property giving a time point lying in the past.

The publisher 32 may send the publications P for the subscribers 33.1-33.3 to a Message Broker 34 which sends the publications P in a "Sub-Pub-pattern" (one-to-many pattern) to the subscribers 33.1-33.3. Thereby, the subscribers 333.1-33.3 may have subscribed to receive publications P from the publisher 32. The subscribers 33.1-33.3 may further have subscribed to receive publications only in a specific topic published by the publisher 32.

In Fig. 6 a flow chart of a second embodiment of the method according to the present invention is schematically depicted. The method steps of the second embodiment correspond to the method steps of the method of Fig. 2. Therefore, only differences are described in the following.

The method is a method for acknowledging receptions. The recipient is a publisher. The at least one sender is a subscriber. The messages of the predefined data format are acknowledgements. Thereto, the method further comprises the steps of publishing 7 publications, receiving 8 the publications and sending 9 an acknowledgement.

The publisher publishes publications for the subscribers in the step of publishing 7. The publications may be forwarded from the publisher to the subscribers by a Message Broker. The subscribers, which may have subscribed to receive publications from the publisher (optionally only in a specific topic), receive the publications in the step of receiving 8. In response to receiving a publication the subscribers each send an acknowledgement in the predefined data format to the memory in the step of sending 9. The publisher asynchronously fetches the acknowledgements from the memory.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In the foregoing detailed description, various features are grouped together in one or more examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects. In the context of the present description and claims the conjunction "or" is to be understood as including ("and/or") and not exclusive ("either ... or") .

## Claims

1. Memory (11, 21, 31) for a cloud-based or automation system for asynchronously receiving messages (M, R, A),
wherein the memory (11, 21, 31) is communicatively coupleable to a recipient (12, 22, 32),
wherein the memory (11, 21, 31) is arranged and configured for receiving and storing messages (M, R, A) of a predefined data format,
wherein the messages (M, R, A) are sent in the predefined data format from at least one sender (13, 23, 33), and
wherein for asynchronously receiving the messages (M, R, A) the stored messages (M, R, A) can be fetched asynchronously from the memory (11, 21, 31) by the recipient (12, 22, 32).

2. Memory (11, 21, 31) according to claim 1,
wherein the memory (11, 21, 31) ignores messages of a different data format then the predefined data format and/or messages from senders that are not registered at the recipient (12, 22, 32).

3. Memory (11, 21, 31) according to claim 1 or 2,
wherein the messages (M, R, A) of the predefined data format have a time-to-life property defining a time point at which the message (M, R, A) is to be deleted and
wherein the memory (11, 21, 31) is further arranged and configured for deleting messages (M, R, A) having a time point for the time-to-life property that lies in the past.

4. Cloud-based or automation system (10, 20, 30) for asynchronously receiving messages (M, R, A), comprising:
- a recipient (12, 22, 32);
- at least one sender (13, 23, 33) arranged and configured for sending a message (M, R, A) in a predefined data format; and
- a memory (11, 21, 31) communicatively coupled to the recipient (12, 22, 32) and arranged and configured for receiving and storing messages (M, R, A) of the predefined data format sent from the at least one sender (13, 23, 33),
wherein the recipient (12, 22, 32) is further arranged and configured for asynchronously fetching the stored messages (M, R, A) from the memory (11, 21, 31) in order to asynchronously receive the messages (M, R, A).

5. Cloud-based or automation system (10, 20, 30) according to claim 4, wherein the memory (11, 21, 31) is the memory (11, 21, 31) according to claim 2 or 3.

6. Cloud-based or automation system (10, 20, 30) according to claim 4 or 5, wherein the recipient (12, 22, 32) ignores messages of a different data format then the predefined data format and/or messages from senders that are not registered at the recipient (12, 22, 32).

7. Cloud-based or automation system (20) according to claim 5 or 6 with the memory (21) according to claim 3 arranged and configured for registering processes (23),
wherein the recipient is a register (22) arranged and configured for listing running processes (23) based on messages (R) sent in the predefined data format by the running processes (23),
wherein the at least one sender is a running process (23) which has to be listed in the register (22) during its runtime,
wherein the messages (R) of the predefined data format from the at least one running process (23) have a time-to-life property resembling a predefined time span and the at least one running process (23) sends a message (R) in the predefined data format with a time-to-life property giving a predefined time span that ends in the future to the memory (21) at the beginning of its runtime and every time during its runtime before the predefined time span of the preceding sent message (R) of the predefined data format elapses, and
wherein the register (22) and/or the memory (21) replaces a stored message (R) of the predefined data format of the at least one running process (23) with a message (R) of the predefined data format of the at least one running process (23) having a time-to-life property giving a predefined time span that expires later than the one of the stored message (R) of the predefined data format of the at least one running process (23).

8. Cloud-based or automation system (30) according to any of claims 4 to 6 arranged and configured for acknowledging receptions,
wherein the recipient is a publisher (32) arranged and configured for publishing publications (P),
wherein the at least one sender is a subscriber (33) arranged and configured for receiving the publications (P) from the publisher (32),
wherein the messages of the predefined data format are acknowledgements (A), and
wherein the at least one subscriber (33) is further arranged and configured for sending an acknowledgement (A) in the predefined data format to the memory (31) in response to reception of a publication (P) sent from the publisher (32).

9. Method of asynchronously receiving messages (M, R, A) in a cloud-based or automation system, comprising the steps:
- receiving and storing (1) a message (M, R, A) of a predefined data format by a memory (11, 21, 31), wherein the message (M, R, A) is sent in the predefined data format from at least one sender (12, 23, 33) ;
- asynchronously fetching (2) the stored message (M, R, A) from the memory (11, 21, 31) by a recipient in order to asynchronously receive the message (M, R, A).

10. Method according to claim 9, further comprising the step:
- ignoring (3) a message of a different data format than the predefined data format and/or a message from a sender that is not registered at the recipient (12, 22, 32) by the memory (11, 21, 31) and/or the recipient (12, 22, 32).

11. Method according to claim 9 or 10, further comprising the step:
- deleting (4) messages (M, R, A) having a time point for a time-to-life property of the stored message (M, R, A) in the predefined data format that lies in the past,
wherein the messages (M, R, A) of the predefined data format have a time-to-life property defining a time point at which the message (M, R, A) is to be deleted.

12. Method according to claim 11 for registering processes (23),
wherein the recipient is a register (22) arranged and configured for listing running processes (23) based on messages (R) sent in the predefined data format by the running processes (23),
wherein the at least one sender is a running process (23) which has to be listed in the register (22) during its runtime, and
wherein the messages (R) of the predefined data format from the at least one running process (23) have a time-to-life property resembling a predefined time span,
the method further comprising the steps:
- sending (5) a message (R) in the predefined data format with a time-to-life property giving a predefined time span that ends in the future to the memory (21) by the at least one running process (23) at the beginning of its runtime and every time during its runtime before the predefined time span of the preceding sent message (R) of the predefined data format elapses; and
- replacing (6) a stored message (R) of the predefined data format of the at least one running process (23) with a message (R) of the predefined data format of the at least one running process (23) having a time-to-life property giving a predefined time span that expires later than the one of the stored message (R) of the predefined data format of the at least one running process (23) in the register (22) and/or the memory (21).

13. Method according to any of claims 9 to 11 for acknowledging receptions,
wherein the recipient is a publisher (32),
wherein the at least one sender is a subscriber (33), and
wherein the messages of the predefined data format are acknowledgements (A),
the method further comprising the steps:
- publishing (7) publications (P) by the publisher (32) ;
- receiving (8) the publications (P) from the publisher (32) by the at least one subscriber (33); and
- sending (9) an acknowledgement (A) in the predefined data format to the memory (31) by the at least one subscriber (33) in response to reception of a publication (P) sent from the publisher (32).

14. Computer program comprising instructions which, when the program is executed by a computer, cause the computer to carry out the steps of the method according to any of claims 9 to 13.

15. Computer-readable medium comprising instructions which, when executed by a computer, cause the computer to carry out the steps of the method according to any of claims 9 to 13.

## Amended claims

### Amended claims in accordance with Rule 137(2) EPC.

1. Memory (11, 21, 31) for a cloud-based or automation system for asynchronously receiving messages (M, R, A), wherein the memory (11, 21, 31) is communicatively coupleable to a recipient (12, 22, 32), wherein the recipient (12, 22, 32) is a service or a controller of the cloud-based or automation system,
wherein the memory (11, 21, 31) is arranged and configured for receiving and storing messages (M, R, A) of a predefined data format,
wherein the messages (M, R, A) are sent in the predefined data format from at least one sender (13, 23, 33), and wherein for asynchronously receiving the messages (M, R, A) the stored messages (M, R, A) can be fetched asynchronously from the memory (11, 21, 31) by the recipient (12, 22, 32).

2. Memory (11, 21, 31) according to claim 1,
wherein the memory (11, 21, 31) ignores messages of a different data format than the predefined data format and/or messages from senders that are not registered at the recipient (12, 22, 32).

3. Memory (11, 21, 31) according to claim 1 or 2,
wherein the messages (M, R, A) of the predefined data format have a time-to-life property defining a time point at which the message (M, R, A) is to be deleted and wherein the memory (11, 21, 31) is further arranged and configured for deleting messages (M, R, A) having a time point for the time-to-life property that lies in the past.

4. Cloud-based or automation system (10, 20, 30) for asynchronously receiving messages (M, R, A), comprising:
- a recipient (12, 22, 32), wherein the recipient (12, 22, 32) is a service or a controller of the cloud-based or automation system;
- at least one sender (13, 23, 33) arranged and configured for sending a message (M, R, A) in a predefined data format; and
- a memory (11, 21, 31) communicatively coupled to the recipient (12, 22, 32) and arranged and configured for receiving and storing messages (M, R, A) of the predefined data format sent from the at least one sender (13, 23, 33),
wherein the recipient (12, 22, 32) is further arranged and configured for asynchronously fetching the stored messages (M, R, A) from the memory (11, 21, 31) in order to asynchronously receive the messages (M, R, A).

5. Cloud-based or automation system (10, 20, 30) according to claim 4, wherein the memory (11, 21, 31) is the memory (11, 21, 31) according to claim 2 or 3.

6. Cloud-based or automation system (10, 20, 30) according to claim 4 or 5, wherein the recipient (12, 22, 32) ignores messages of a different data format than the predefined data format and/or messages from senders that are not registered at the recipient (12, 22, 32).

7. Cloud-based or automation system (20) according to claim 5 or 6 with the memory (21) according to claim 3 arranged and configured for registering processes (23),
wherein the recipient is a register (22) arranged and configured for listing running processes (23) based on messages (R) sent in the predefined data format by the running processes (23),
wherein the at least one sender is a running process (23) which has to be listed in the register (22) during its runtime,
wherein the messages (R) of the predefined data format from the at least one running process (23) have the time-to-life property resembling a predefined time span and the at least one running process (23) sends a message (R) in the predefined data format with a time-to-life property giving a predefined time span that ends in the future to the memory (21) at the beginning of its runtime and every time during its runtime before the predefined time span of the preceding sent message (R) of the predefined data format elapses, and
wherein the register (22) and/or the memory (21) replaces a stored message (R) of the predefined data format of the at least one running process (23) with a message (R) of the predefined data format of the at least one running process (23) having a time-to-life property giving a predefined time span that expires later than the one of the stored message (R) of the predefined data format of the at least one running process (23).

8. Cloud-based or automation system (30) according to any of claims 4 to 6 arranged and configured for acknowledging receptions,
wherein the recipient is a publisher (32) arranged and configured for publishing publications (P),
wherein the at least one sender is a subscriber (33) arranged and configured for receiving the publications (P) from the publisher (32),
wherein the messages of the predefined data format are acknowledgements (A), and
wherein the at least one subscriber (33) is further arranged and configured for sending an acknowledgement (A) in the predefined data format to the memory (31) in response to reception of a publication (P) sent from the publisher (32).

9. Method of asynchronously receiving messages (M, R, A) in a cloud-based or automation system, comprising the steps:
- receiving and storing (1) a message (M, R, A) of a predefined data format by a memory (11, 21, 31), wherein the message (M, R, A) is sent in the predefined data format from at least one sender (12, 23, 33);
- asynchronously fetching (2) the stored message (M, R, A) from the memory (11, 21, 31) by a recipient in order to asynchronously receive the message (M, R, A), wherein the recipient (12, 22, 32) is a service or a controller of the cloud-based or automation system.

10. Method according to claim 9, further comprising the step:
- ignoring (3) a message of a different data format than the predefined data format and/or a message from a sender that is not registered at the recipient (12, 22, 32) by the memory (11, 21, 31) and/or the recipient (12, 22, 32).

11. Method according to claim 9 or 10, further comprising the step:
- deleting (4) messages (M, R, A) having a time point for a time-to-life property of the stored message (M, R, A) in the predefined data format that lies in the past,
wherein the messages (M, R, A) of the predefined data format have a time-to-life property defining a time point at which the message (M, R, A) is to be deleted.

12. Method according to claim 11 for registering processes (23),
wherein the recipient is a register (22) arranged and configured for listing running processes (23) based on messages (R) sent in the predefined data format by the running processes (23),
wherein the at least one sender is a running process (23) which has to be listed in the register (22) during its runtime, and
wherein the messages (R) of the predefined data format from the at least one running process (23) have a time-to-life property resembling a predefined time span,
the method further comprising the steps:
- sending (5) a message (R) in the predefined data format with a time-to-life property giving a predefined time span that ends in the future to the memory (21) by the at least one running process (23) at the beginning of its runtime and every time during its runtime before the predefined time span of the preceding sent message (R) of the predefined data format elapses; and
- replacing (6) a stored message (R) of the predefined data format of the at least one running process (23) with a message (R) of the predefined data format of the at least one running process (23) having a time-to-life property giving a predefined time span that expires later than the one of the stored message (R) of the predefined data format of the at least one running process (23) in the register (22) and/or the memory (21).

13. Method according to any of claims 9 to 11 for acknowledging receptions,
wherein the recipient is a publisher (32),
wherein the at least one sender is a subscriber (33), and wherein the messages of the predefined data format are acknowledgements (A),
the method further comprising the steps:
- publishing (7) publications (P) by the publisher (32) ;
- receiving (8) the publications (P) from the publisher (32) by the at least one subscriber (33); and
- sending (9) an acknowledgement (A) in the predefined data format to the memory (31) by the at least one subscriber (33) in response to reception of a publication (P) sent from the publisher (32).

14. Computer program comprising instructions which, when the program is executed by a computer, cause the computer to carry out the steps of the method according to any of claims 9 to 13.

15. Computer-readable medium comprising instructions which, when executed by a computer, cause the computer to carry out the steps of the method according to any of claims 9 to 13.
